(19) Europäisches Patentamt
European Patent Office
Office européen des brevets

(11) **EP 2 252 049 B1**

(12) **EUROPÄISCHE PATENTSCHRIFT**

(45) Veröffentlichungstag und Bekanntmachung des Hinweises auf die Patenterteilung:
**14.08.2013 Patentblatt 2013/33**

(51) Int Cl.:
*H04N 5/57* *(2006.01)*  *G01J 3/00* *(2006.01)*
*H04N 17/00* *(2006.01)*

(21) Anmeldenummer: **10162664.6**

(22) Anmeldetag: **12.05.2010**

(54) **Verfahren zum Kalibrieren eines Monitors und Sensor zum Messen einer Lichtgröße**

Method for calibrating a monitor and sensor for measuring light intensity

Procédé de calibrage d'un moniteur et capteur de mesure d'une grandeur de luminosité

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **14.05.2009 DE 102009021375**

(43) Veröffentlichungstag der Anmeldung:
**17.11.2010 Patentblatt 2010/46**

(73) Patentinhaber: **Leppla, Marc**
**38114 Braunschweig (DE)**

(72) Erfinder: **Leppla, Marc**
**38114 Braunschweig (DE)**

(74) Vertreter: **Rau, Schneck & Hübner et al**
**Patentanwälte - Rechtsanwälte**
**Königstraße 2**
**90402 Nürnberg (DE)**

(56) Entgegenhaltungen:
**EP-A1- 0 491 131      EP-A1- 0 852 961**
**WO-A2-00/16359      US-A- 5 515 079**
**US-A- 5 739 809      US-A1- 2006 007 185**
**US-A1- 2006 258 465**

EP 2 252 049 B1

**Beschreibung**

Die Erfindung betrifft ein Verfahren zum Kalibrieren eines Monitors, bei dem ein Sensor zum Messen einer Lichtgröße verwendet wird. Solche Sensoren werden beispielsweise dazu eingesetzt, um an einem Bildschirm eine Lichtgröße, beispielsweise eine Helligkeit, Leuchtdichte oder die Farbe zu messen.

Der Hintergrund dieser Erfindung ist, dass Monitore, die in der medizinischen Bildgebung Verwendung finden, besonderen Anforderungen an die Kalibrierung unterliegen. Um eine Wiedergabe in gleich bleibender Qualität zu erreichen, müssen solche Monitore richtig eingestellt und kalibriert werden. Die DIN V6868 - 57 und die AAPM TG 18 beschreiben die Kalibrierung der einzelnen Bildschirmparameter und legen die erforderlichen Daten für weitere Konstanzprüfungen fest.

Bekannte Monitore besitzen einen fest am Rahmen montierten Sensor, mit dem beständig die Leuchtdichte des Bildschirms gemessen wird. So wird erreicht, dass eine etwaige Helligkeitsänderung aufgrund von Alterung erkannt wird und ausgeglichen werden kann. Wenn Bildschirme altern, kann das lokal unterschiedlich erfolgen. Das heißt, dass die Homogenität des Bildschirms abnimmt. Das führt dazu, dass ein homogen darzustellendes Bild lokal mit unterschiedlichen Helligkeiten dargestellt wird. Übersteigt die Inhomogenität einen vorgegebenen Schwellenwert, so wird der Monitor gegen einen neuen Monitor ausgetauscht. Aus diesem Grund wird die Homogenität regelmäßig gemessen.

Nachteilig an bekannten Systemen ist, dass das Feststellen der Homogenität aufwändig ist und von spezialisiertem Fachpersonal durchzuführen ist. Nachteilig ist zudem, dass eine im Herstellungsprozess festgestellte Inhomogenität zwischen dem Zentrum des Bildschirms und dem Rand sich mit der Zeit verändern kann. Wird zur Überwachung der Lichtgröße im Zentrum die Lichtgröße am Rand bestimmt, so kann das zu Fehlern führen.

Aus der US 7,064,831 B2 ist ein Colorimeter bekannt, das durch ein gleitfähiges Gewicht relativ zu einem Bildschirm angeordnet werden kann. Nachteilig an diesem Colorimeter ist, dass es sich nicht zur Dauerüberwachung eines Bildschirms geeignet ist.

Aus der US 6,067,166 ist eine Montagevorrichtung für ein Colorimeter bekannt, das ein um den Monitor umlaufendes Band aufweist. Auch diese Vorrichtung ist nicht geeignet, um die Eigenschaften des Monitors permanent zu überwachen.

Der Erfindung liegt die Aufgabe zugrunde, Nachteile im Stand der Technik zu überwinden.

Die Erfindung löst das Problem durch ein Verfahren zum Kalibrieren eines Monitors gemäß Patentanspruch 1 mit den Schritten (i) Positionieren eines erfindungsgemäßen Sensors, (ii) Anzeigen von Bildern auf dem Bildschirm in Form von über den Bildschirm in x- und y-Richtung laufenden Streifen, so dass aus einer mit einem Sensor gemessenen Lichtgröße die Position des Sensors auf dem Bildschirm ermittelbar ist, (iii) Erfassen jeweils eines durch die am Sensor vorbeilaufenden Streifen erzeugten, einen Helligkeitswert kodierenden Signals des Sensors in Abhängigkeit von der Zeit derart, dass aus dem Zeitpunkt der Änderung des Helligkeitswerts jeweils die x- und y-Koordinate der Position des Sensors bestimmt wird , (iv) Ermitteln einer Position des Sensors auf dem Bildschirm aus dem Signal mit Hilfe der x- und y-Koordinate und (v) Ermitteln zumindest einer Lichtgröße (I) des Bildschirms (36) an der Position (P1).

Das Verfahren wird unterstützt durch einen Sensor zum Messen einer Lichtgröße, der eine Montagevorrichtung aufweist, die zum lösbaren Fixieren des Sensors an einem Monitor dergestalt ausgebildet ist, dass mittels des Sensors im fixierten Zustand die Lichtgröße eines Bildschirms des Monitors messbar ist.

Die Montagevorrichtung ist dabei ausgebildet zum formschlüssigen oder magnetischen Verbinden mit dem Monitor.

Ein Sensor zum Messen einer Lichtgröße kann ferner so ausgelegt sein, dass die Montagevorrichtung ausgebildet ist zum Befestigen an einem Rahmen eines Monitors.

Ein Sensor zum Messen einer Lichtgröße kann fernerso ausgelegt sein, dass eine Abschirmung vorgesehen ist, die ausgebildet ist zum Abschirmen von Streulicht, wenn der Sensor am Monitor befestigt ist.

Ein Sensor zum Messen einer Lichtgröße kann ferner so ausgelegt sein, dass eine Verbindungsvorrichtung zum Übermitteln von Messdaten der Lichtgröße an eine elektrische Steuereinheit (16) vorgesehen ist, wobei die Verbindungsvorrichtung einen Aktionsradius hat, der so groß ist, dass der Sensor an allen Positionen auf dem Bildschirm positionierbar ist.

Zu erwähnen bei dem Sensor ist, dass er während des Dauerbetriebs fest mit dem Monitor verbunden werden kann. Beispielsweise ist der Sensor ausgebildet, um in einer Ecke des Bildschirmes befestigt zu werden. Der Sensor kann dann dauerhaft die Helligkeit, das heißt die Leuchtdichte des Bildschirms überwachen. Der Sensor kann aber auch vom Monitor gelöst werden, so dass er von einem Bediener an einem beliebigen Ort auf dem Bildschirm positioniert werden kann, um so die Homogenität des Bildschirms zu vermessen. Da der Sensor immer verfügbar ist, kann diese Arbeit auch von dem normalen Benutzer des Monitors durchgeführt werden, was wenig Aufwand bedeutet.

Es ist ferner zu erwähnen, dass der Sensor dadurch, dass er lösbar mit dem Monitor verbunden ist, leicht nachkalibriert werden kann. Dazu muss der Sensor lediglich vom Monitor entfernt und einer Kalibriervorrichtung zugeführt werden.

Vorteilhaft ist zudem, dass der Sensor leicht austauschbar ist. Das ermöglicht es, fehlerhafte Sensoren schnell zu ersetzen. Auch ist ein Rückbeleuchtungssensor (back light sensor) entbehrlich.

Es ist ein weiterer Vorteil, dass die genannten Vorteile mit technisch wenig Aufwand umsetzbar sind.

So ist es ausreichend, beispielsweise eine Schiene an einem Rahmen des Monitors vorzusehen, an dem der Monitor stabil befestigt werden kann.

Vorteilhaft an dem erfindungsgemäßen Verfahren ist, dass es schnell und auch von ungeschultem Personal durchgeführt werden kann. So sind die angegebenen Schritte allesamt automatisch durchführbar. Lediglich ein Verändern der Position des Sensors wird vorzugsweise manuell durchgeführt, obwohl es auch automatisiert sein kann. Hieraus folgt, dass der Monitor leicht auf seine Abstrahleigenschaften untersucht werden kann und Fehler durch sich mit der Zeit verändernde Abstrahleigenschaften vermieden werden. Dadurch können auch Monitore, die als Massenprodukt hergestellt worden sind und daher keinen besonderen Anforderungen hinsichtlich der Konstanz ihrer Abstrahleigenschaften genügen, in Anwendungen eingesetzt werden, bei denen es auf diese Konstanz besonders ankommt. Beispielsweise können handelsübliche Monitore in medizinischen Darstellungsvorrichtung verwendet werden.

Vorteilhaft ist zudem, dass von einem Zentralrechner aus ein Befehl gesendet werden kann, der an einem oder mehreren Monitoren ein Programm startet, das den Benutzer des Monitors auffordert, den Sensor an vorgegebenen Stellen des Bildschirms zu positionieren, wobei ein erfindungsgemäßes Verfahren durchgeführt wird. Es kann vorgesehen sein, dass der Monitor erst nach Beenden des Verfahrens wieder regulär benutzt werden kann. So kann über ein Netzwerk oder das Internet eine Vielzahl an Monitoren überprüft werden, ohne dass Fachpersonal notwendig ist.

Im Rahmen der vorliegenden Beschreibung wird unter dem Merkmal, dass die Montagevorrichtung zum lösbaren Fixieren des Sensors an einem Monitor ausgebildet ist, insbesondere verstanden, dass der Sensor mittels der Montagevorrichtung, die Teil des Sensors ist, so am Rahmen befestigt werden kann, dass der Sensor dauerhaft in einer gleich bleibenden Position relativ zum Bildschirm verbleibt. Der Sensor kann vom Rahmen auch wieder gelöst und erneut befestigt werden.

Unter dem Merkmal, dass mittels des Sensors im fixierten Zustand die Lichtgröße eines Bildschirms des Monitors messbar ist, wird insbesondere verstanden, dass der Sensor im montierten Zustand dem Bildschirm eine Sensorzelle zuwendet, mittels der vom Bildschirm stammendes Licht erfasst werden kann.

Unter dem Sensor zum Messen einer Lichtgröße wird insbesondere ein Helligkeitssensor, ein Farbsensor, eine Colorimeter, ein Spektrophotomoter oder ein Lumineszensmeter verstanden. Es ist vorteilhaft, wenn der Sensor mehr als eine Lichtgröße erfassen kann.

Unter der Lichtgröße, die auch als Lichteigenschaft bezeichnet werden könnte, wird eine messbare Eigenschaft des Lichts verstanden. Das ist insbesondere eine Helligkeit (beispielsweise in $cd/m^2$), Intensität und/oder Luminanz, eine Helligkeit (beispielsweise in $cd/m^2$), Intensität und/oder Luminanz einer Farbe wie Rot, Grün oder Blau, eine Farbe oder das Spektrum des Lichts verstanden. Übliche Messgrößen sind YXZ, yxY und/oder Spektralwerte.

Unter der Montagevorrichtung wird insbesondere jede Vorrichtung verstanden, die ein Befestigen des Sensors relativ zum Monitor auf eine Weise erlaubt, dass der Sensor an einen definierten Ort relativ zum Bildschirm gehalten wird.

Unter dem Monitor wird dabei die gesamte Vorrichtung verstanden, wohingegen der Bildschirm dasjenige Teil des Monitors ist, auf dem das Bild angezeigt wird.

Unter einer medizinischen Darstellungsvorrichtung wird eine Vorrichtung aus zumindest zwei Monitoren verstanden, die zum Darstellen von Aufnahmen des menschlichen oder tierischen Körpers oder Teilen davon eingesetzt wird. Beispielsweise ist die medizinische Darstellungsvorrichtung mit einem digitalen Röntgengerät verbunden und eingerichtet, um Röntgenbilder darzustellen. An die Monitore von medizinischen Darstellungsvorrichtungen werden besonders hohe Anforderungen hinsichtlich der Homogenität gestellt, weil sich beispielsweise Tumoren durch Helligkeitsunterschiede auf dem dargestellten Röntgenbild erkennen lassen. Eine zu hohe Inhomogenität des Monitors kann dazu führen, dass ein Kontrast in einem Röntgenbild dargestellt wird, der in der Realität nicht existiert. So kann ein falsch positiver Tumorbefund entstehen.

Die Montagevorrichtung ist ausgebildet zum formschlüssigen oder magnetischen Verbinden mit dem Monitor. Durch Formschluss bzw. durch magnetische Verbindung lassen sich besonders feste und gleichzeitig dauerhafte, lösbare Verbindungen zwischen dem Monitor und dem Sensor herstellen.

Bevorzugt ist die Montagevorrichtung ausgebildet zum Befestigen an einem Rahmen des Monitors. Beispielsweise umfasst die Montagevorrichtung Schienen. Die Schienen können beispielsweise benachbart zu einer Ecke des Bildschirms am Rahmen befestigt sein.

Es besitzt der Sensor eine Abschirmung, die ausgebildet ist zum Abschirmen von Streulicht, insbesondere wenn der Sensor am Monitor befestigt ist. Auf diese Weise liefert der Sensor einen genauen Wert für die Lichtgröße des Lichts, das vom Bildschirm abgestrahlt wird. Wird beispielsweise auf dem Bildschirm ein Norm-Grauwert angezeigt, so kann anhand des Messwertes des Sensors ermittelt werden, ob diejenige Helligkeit angezeigt wird, die angezeigt werden müsste.

Der Sensor kann eine Verbindungsvorrichtung zum Übermitteln von Messdaten der Lichtgröße an eine elektrische Steuereinheit umfassen, wobei die Verbindungsvorrichtung einen Aktionsradius hat, der so groß ist, dass der Sensor an allen Positionen auf dem Bildschirm positionierbar ist. Unter dem Aktionsradius wird die diejenige Strecke verstanden, die der Sensor von der Position zurücklegen kann, an der er mit dem Monitor festverbindbar ist. Die Verbindungsvorrichtung kann beispielsweise ein Kabel sein. Deren Aktionsradius entspricht ihrer Kabellänge. Alternativ ist es aber auch möglich, dass die Verbindungsvorrichtung durch eine Funkverbindung aufgebaut ist.

Es kann zudem ein Monitor mit einem Bildschirm zum Anzeigen eines Bilds und einem erfindungsgemäßen Sensor vorgesehen sein, der zum Erfassen der Lichtgröße am Bildschirm lösbar befestigt und diesem zugewandt ist.

Dieser Monitor kann vorteilhafterweise charakterisiert sein durch einen Rahmen, der den Bildschirm zumindest teilweise umgibt, wobei der Sensor in einer Ecke des Rahmens befestigt ist.

Dieser Monitor kann ferner vorteilhafter Weise so ausgelegt sein, dass der Aktionsradius des Sensors zumindest einer Bildschirmbreite entspricht.

Dieser Monitor kann ferner vorteilhafter Weise so beschaffen sein, dass der Sensor eine Fläche des Bildschirms abdeckt, die kleiner ist als ein Hundertstel einer Gesamt-Bildschirmfläche.

Dieser Monitor kann ferner eine Positioniervorrichtung zum automatischen Positionieren des Sensors an einer vorgebbaren Stelle des Bildschirms aufweisen.

Vorteilhaft ist, wenn der Monitor einen Rahmen besitzt, der den Bildschirm zumindest teilweise umgibt, wobei der Sensor in einer Ecke des Rahmens befestigt ist. Der Rahmen wird auch als Bretzel bezeichnet. Es ist dabei möglich, nicht aber notwendig, dass der Sensor genau in der Ecke des Rahmens befestigt ist. Möglich ist auch, dass er mit einem geringen Abstand zur Ecke angeordnet ist.

Der Aktionsradius des Sensors kann zumindest einer Bildschirmbreite, insbesondere einer Bildschirmdiagonale entsprechen. Dadurch ist sichergestellt, dass der Sensor alle Punkte auf dem Bildschirm erreicht.

Günstig ist es, wenn der Sensor eine Fläche des Bildschirms abdeckt, die kleiner ist als ein Hundertstel einer Gesamt-Bildschirmfläche. So stört der Sensor den Gebrauch des Monitors nur in sehr geringem Maße.

Erfindungsgemäß ist zudem eine z.B. medizinische Darstellungsvorrichtung mit einem ersten Monitor und einem zweiten Monitor gemäß Anspruch 16.

Die Darstellungsvorrichtung kann vorteilhafter Weise dadurch gekennzeichnet sein, dass der Sensor einen Helligkeitssensor umfasst ist.

Die Darstellungsvorrichtung kann ferner vorteilhafter Weise dadurch gekennzeichnet sein, dass der Sensor drei Farbsensoren umfasst.

Die Darstellungsvorrichtung kann ferner vorteilhafter Weise dadurch gekennzeichnet sein, dass der Sensor zumindest einen Spektralverteilungssensor umfasst.

Die Darstellungsvorrichtung kann ferner vorteilhafter Weise dadurch gekennzeichnet sein, dass der Aktionsradius so groß ist, dass die Lichtgröße auf beiden Monitoren messbar ist.

Die Darstellungsvorrichtung kann ferner vorteilhafter Weise dadurch gekennzeichnet sein, dass die elektrische Steuereinheit eingerichtet ist zum Durchführen eines Verfahrens gemäß einem folgenden Ansprüche. Sensor.

Gemäß dem Kennzeichnungsteil des Anspruches 16 umfasst die Darstellungsvorrichtung eine elektrische Steuereinheit, die eingerichtet ist zum Durchführen eines Verfahrens mit den Schritten (i) Anzeigen des Bilds in Form von über den Bildschirm in x- und y-Richtung laufenden Streifen auf den Bildschirm eines der beiden Monitore an sich zeitlich verändernden Positionen, (ii) Erfassen jeweils eines durch die am Sensor vorbeilaufenden Streifen erzeugten, einen Helligkeitswert kodierenden Signals des Sensors in Abhängigkeit von der Zeit derart, dass aus dem Zeitpunkt der Änderung des Helligkeitswerts jeweils die x- und y-Koordinate der Position des Sensors bestimmt wird, (iii) Ermitteln einer Position des Sensors auf dem Bildschirm aus dem Signal mit Hilfe der x- un y-Koordinate, (iv) Ermitteln zumindest einer Lichtgröße des Bildschirms an der ermittelten Position und (v) Wiederholen der Schritte (i) bis (iv) für zumindest eine weitere Position, so dass eine Abstrahlcharakteristik des Bildschirms erhalten wird.

Unter der Abstrahlcharakteristik wird insbesondere eine Homogenität hinsichtlich der Helligkeit einer Farbe, mehrerer Farben oder eines Spektrums verstanden. Unter dem Merkmal, dass die Steuereinheit eingerichtet ist zum Durchführen der angegebenen Schritte wird insbesondere verstanden, dass die Steuereinheit über einen digitalen Speicher verfügt, in dem Programmkode abgelegt ist. Dieser Programmkode führt dazu, dass die Steuereinheit die angegebenen Schritte automatisch durchführt.

Um die Schritte (i) bis (iv) zu wiederholen, wird beispielsweise der Sensor an einer anderen Position relativ zum Bildschirm zur Ruhe gebracht, beispielsweise befestigt oder mit der Hand an den Bildschirm gehalten.

Es ist möglich, dass die elektrische Steuereinheit Teil eines der beiden Monitore, Teil des Sensors oder aber eine externe Steuereinheit ist, beispielsweise in Form eines Rechners, der gleichzeitig zum Ansteuern der beiden Monitore verwendet werden kann.

Es werden die Verfahrensschritte bevorzugt für zumindest eine weitere, von der ersten Position verschiedene, zweite Position durchgeführt. Es ergeben sich dann verschiedene Lichtgrößenwerte, aus denen die Homogenität des Bildschirms berechnet werden kann.

Vorzugsweise ist die Abstrahlcharakteristik eine Homogenität des Bildschirms, wobei das Verfahren den Schritt und des Ansteuerns des Bildschirms umfasst, so dass eine Homogenität des Bildschirms vermindert wird. Wenn, beispielsweise aufgrund von Alterung, ein homogen darzustellendes Bild auf dem Monitor nicht homogen, sondern mit unterschiedlichen Helligkeiten dargestellt wird, so wird dies bevorzugt dadurch korrigiert, dass zunächst an einer Mehrzahl von Positionen die vom Bildschirm abgegebene Helligkeit in Relation mit einer Soll-Helligkeit gesetzt wird. Aus dieser Mehrzahl an Messwerten wird dann eine Korrekturfaktormatrix berechnet, die für einzelne Bereiche des Bildschirms angibt, um wie viel stärker bzw. schwächer die Helligkeit angesteuert werden muss, damit sich tatsächlich die gewünschte Helligkeit einstellt.

Das erfindungsgemäße Verfahren kann einfach dadurch durchgeführt werden, dass der Sensor vom Monitor gelöst und an einer beliebigen Stelle auf den Bildschirm des Monitors aufgesetzt und dort gehalten wird. Es werden dann die Schritte (ii) bis (v) von einer elektrischen Steuereinheit durchgeführt. Das führt dazu, dass die Position des Sensors auf dem Bildschirm bekannt ist. In einem weiteren Schritt wird dann die Lichtgröße an der soeben ermittelten Position gemessen.

Nach den Verfahrensschritten kann der Sensor dann einfach wieder mit dem Monitor verbunden werden, beispielsweise in einer Ecke des Bildschirms, so dass dauerhaft die Lichtgröße, beispielsweise die Helligkeit und/oder die Farbe, an dieser Stelle gemessen werden kann. Dadurch, dass der Sensor lösbar mit dem Monitor verbunden ist, kann damit mit nur einem Sensor sowohl die Helligkeit als auch die Homogenität des Bildschirms gemessen werden.

Bevorzugt umfasst das erfindungsgemäße Verfahren den Schritt eines Ansteuerns der Bildschirme des ersten Monitors und des zweiten Monitors so, dass eine Inhomogenität zwischen beiden vermindert, insbesondere ausgeglichen wird. Beispielsweise wird dazu die Helligkeit der Bildschirme gemessen, wenn diese auf Weiß eingestellt sind (driving level 255). Eine größere Helligkeit ist also nicht ansteuerbar. Danach wird an einer Mehrzahl an Positionen sowohl auf dem Bildschirm des ersten Monitors als auch auf dem Bildschirm des zweiten Monitors die Helligkeit gemessen. Nachfolgend wird das Minimum der gemessenen Werte bestimmt. Im weiteren Betrieb der beiden Monitore werden dann alle Pixel der Bildschirme so angesteuert, dass sie dann, wenn die Farbe weiß darzustellen ist, genau die Helligkeit abgeben, wie es dem Minimum der Helligkeitswerte entspricht. Auf diese Weise ist der dargestellte Kontrast stets korrekt, auch wenn die maximal darstellbare Helligkeit dadurch an manchen Stellen sinkt.

Im Folgenden wird die Erfindung anhand eines exemplarischen Ausführungsbeispiels näher beschrieben. Dabei zeigt

Figur 1    eine erfindungsgemäße medizinische Darstellungsvorrichtung mit einem erfindungsgemäßen ersten Monitor, einem erfindungsgemäßen zweiten Monitor und einem erfindungsgemäßen Sensor,

Figur 2    eine Detailansicht des ersten Monitors mit dem erfindungsgemäßen Sensor in einer perspektivischen Ansicht,

Figur 3    einen Schnitt durch den Monitor, der senkrecht zum Rahmen des Monitors verläuft,

Figur 4    eine Draufsicht auf den Sensor gemäß Figur 2 und

Figur 5    einen Querschnitt parallel zum Bildschirm durch den Sensor.

Figur 6    zeigt schematisch die beiden Monitore der medizinische Dar- stellungsvorrichtung nach Figur 1 mit gemessenen relativen In- tensitäten und

Figur 7    zeigt, wie im Rahmen eines erfindungsgemäßen Verfahrens aus zwei Gamuts für gemessene CIE x/y/Y-Werte für zwei Bild- schirme ein Ziel-Gamut bestimmt wird.

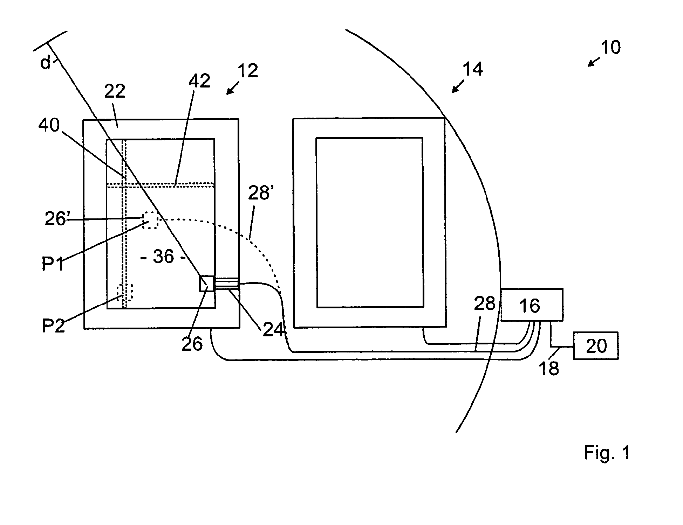

Figur 1 zeigt eine medizinische Darstellungsvorrichtung 10, die einen ersten Monitor 12 und einen zweiten Monitor 14 sowie eine Steuervorrichtung 16 in Form eines Rechners aufweist. Die beiden Monitore 12, 14 sind mit der Steuereinheit in Form des Rechners 16 über Kabel verbunden und werden von dem Rechner 16 zum Darstellen von Bildern angesteuert. Der Rechner 16 seinerseits ist über eine Netzwerkleitung 18 mit einem Server 20 verbunden.

Der erste Monitor 12 besitzt einen Rahmen 22, der auch als Bretzel bezeichnet wird. An dem Rahmen 22 ist eine Aufnahme 24 befestigt, beispielsweise aufgeklebt. Die Aufnahme 24 hat die Form einer Schiene, in die ein Sensor 26 eingeschoben werden kann. Der Sensor 26 ist über eine Verbindungsvorrichtung 28 in Form eines Verbindungskabels, beispielsweise eines USB-Kabels, mit dem Rechner 16 verbunden. Die Verbindungsvorrichtung 28 hat einen Aktionsradius d in Form einer Kabellänge, der so groß ist, dass alle Punkte auf beiden Monitoren 12, 14 erreicht werden.

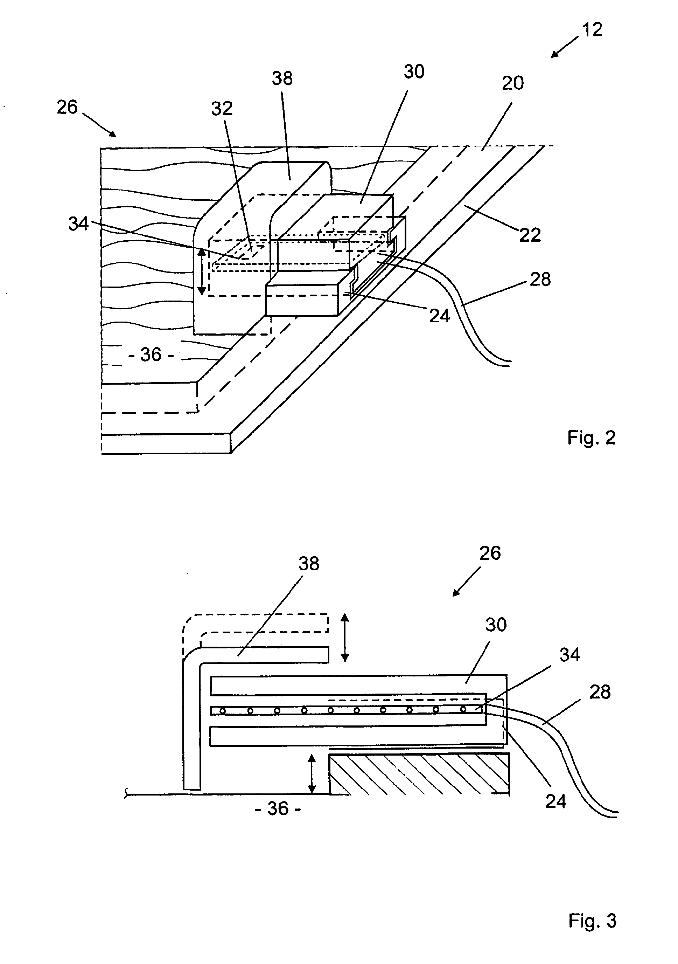

Figur 2 zeigt den Sensor 26, der eine Montagevorrichtung 30 aufweist, mit der er in der Aufnahme 24 formschlüssig und spielfrei aufgenommen ist. Der Sensor 26 umfasst eine Sensorzelle 32, die auf einer Platine 34 angeordnet ist. In dem Zustand, in dem der Sensor mit dem Monitor 12 verbunden ist, ist die Sensorzelle 32 einem Bildschirm 36 des Monitors 12 zugewandt. Eine Abschirmung 38 verhindert, dass Streulicht auf die Sensorzelle 32 fällt. Das gesamte Licht, das von der Sensorzelle 32 erfasst wird, stammt daher von dem Bildschirm 36.

Figur 3 zeigt einen Querschnitt senkrecht zum Bildschirm 36 durch den Sensor 26. Es ist zu erkennen, dass die Abschirmung 38 höhenverschiebbar auf den Bildschirm 36 zu und von dem Bildschirm 36 weg an der Montagevorrichtung 30 befestigt ist. Beispielsweise ist die Abschirmung so ausgebildet, dass sie sich um zumindest 1 Zenitmeter in der Höhe verstellen lässt.

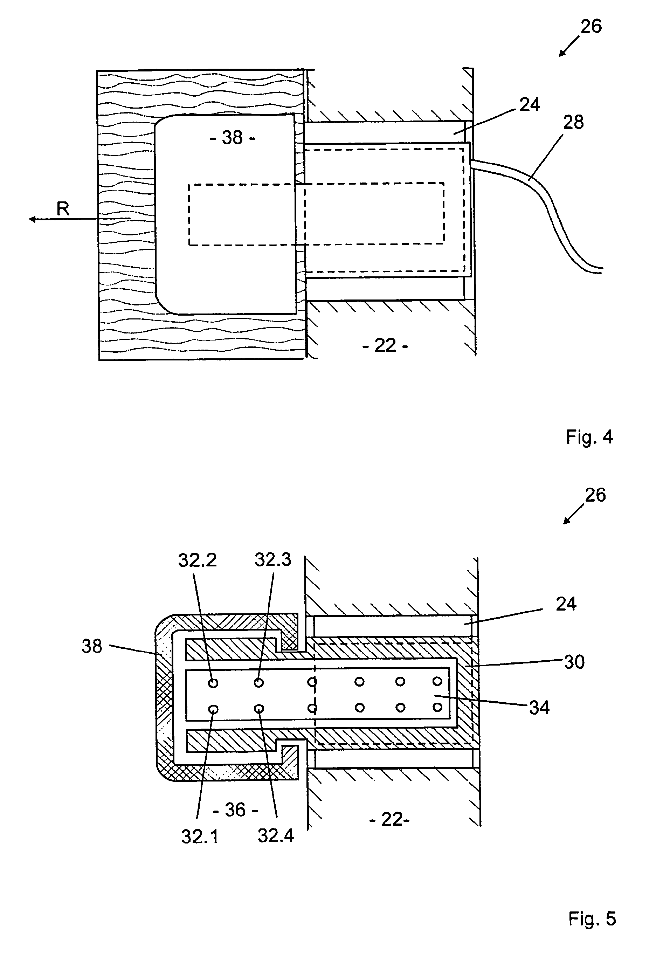

Figur 4 zeigt eine Draufsicht auf den Sensor 26. Um den Sensor 26 vom Rahmen 22 zu lösen, wird der Sensor, wie durch einen Pfeil R angedeutet ist, aus der Aufnahme 24, die als Schiene ausgebildet ist, herausgezogen. Über die Verbindungsvorrichtung 28 bleibt der Sensor 26 mit dem Rechner 16 (vgl. Figur 1) verbunden.

Figur 5 zeigt einen Querschnitt durch den Sensor 26. Es ist zu erkennen, dass die Abschirmung 38 in eine Ausnehmung in der Montagevorrichtung 30 eingreift.

Figur 5 zeigt schematisch, dass die Platine 34 vier Sensorzellen 32.1, 32.2, 32.3, 32.4 aufweist. Die erste Sensorzelle 32.1 besitzt einen Rot-Filter, die zweite Sensorzelle 32.2 einen Grün-Filter und die dritte Sensorzelle 32.3 einen Blau-Filter. Die vierte Sensorzelle 32.4 hat keinen Filter und dient zum Messen der Helligkeit, also der Leuchtdichte. Der Sensor 26 kann auf diese Weise sowohl als Koloriemeter als auch als Luminanzmeter verwendet werden. Alternativ oder additiv kann auf der Sensorzelle 32 ein Prisma angebracht sein, das Licht vom Bildschirm 36 auf ein Array an Fotozellen leitet, so dass das vom Bildschirm 36 abgestrahlte Spektrum gemessen werden kann.

Zum Durchführen eines erfindungsgemäßen Verfahrens wird der Sensor 26 vom ersten Monitor 12 getrennt. Er wird danach von Hand oder gegebenenfalls automatisch mittels einer nicht eingezeichneten Positioniervorrichtung auf eine erste, in Figur 1 gestrichelt eingezeichnete Position P1 positioniert.

Danach steuert der Rechner 16 den ersten Monitor 12 so an, dass beispielsweise ein von links nach rechts verlaufender Streifen 40 (Figur 1) auf dem Bildschirm 36 dargestellt wird. Der Sensor 26, der an der Position P1 das Bezugszeichen 26' trägt, liefert über die Verbindungsvorrichtung 28' in Echtzeit ein Signal, dass einen Messwert der Lichtgröße in Form von Helligkeitswerten kodiert. Dann, wenn der von links nach rechts laufende Streifen die Position P1 passiert, misst der Sensor 26' einen erhöhten Wert. Danach fällt der Wert wieder ab, da der Streifen 40 über den Bildschirm 36 weitergelaufen ist. Aus dem Zeitpunkt der Helligkeitsänderung bestimmt der Rechner 16 die x-Koordinate der Position P1.

Danach wird ein von unten nach oben laufender Streifen 42 auf dem Bildschirm 36 dargestellt und entsprechend die y-Koordinate der Position P1 bestimmt. Es ist auch möglich zwei oder mehr Streifen verschiedener Farben gleichzeitig über den Bildschirm 36 laufen zu lassen. Aus den Zeitpunkten, zu denen die jeweiligen Intensitätsänderungen detektiert werden, wird die Position P1 berechnet.

Ist die Position P1 bestimmt, wird zumindest auch an der Position P1 im Zentrum des Bildschirms 36 ein vorgegebener Helligkeitswert angezeigt, beispielsweise das hellste Weiß, das mit den Bildschirm 36 angezeigt werden kann. Der Helligkeitswert wird von dem Sensor 26 ausgelesen und an den Rechner 16 gesendet. Unter dem Zentrum des Bildschirms 36 wird der Bereich des Bildschirms 36 verstanden, der ein Viertel der Größe des gesamten Bildschirms hat und dessen geometrischer Schwerpunkt mit dem des gesamten Bildschirms übereinstimmt.

Nachdem der Messwert für die Position P1 empfangen worden ist, gibt der Rechner 16 eine akustische und/oder optische Meldung aus, so dass der Benutzer den Sensor 26 an einer zweiten Position, beispielsweise der Position P2 am Rand des Bildschirms, positioniert. Der Rand des Bildschirms sind alle Bereiche, die nicht zum Zentrum gehören. Wie oben beschrieben, wird nun erneut die exakte Position P2 auf dem Bildschirm 36 ermittelt und danach der Helligkeitswert gemessen. Das wird für eine Vielzahl von Positionen Pi, i = 1, 2, 3, ..., wiederholt. An jeder Position Pi wird eine Lichtgröße $L_i$, beispielsweise eine Intensität $I_i$, also eine Helligkeit, gemessen.

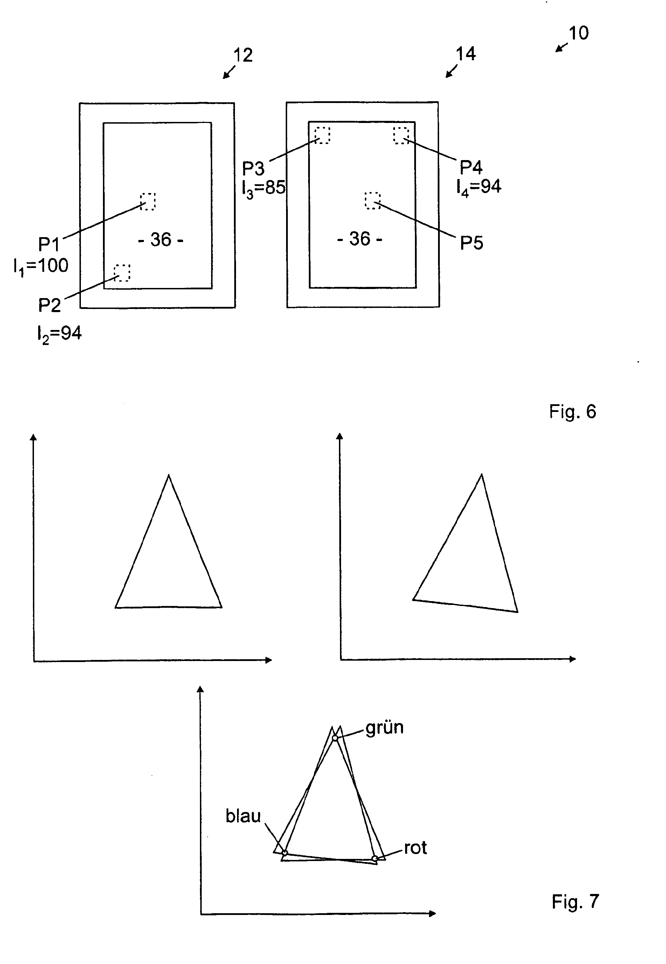

Figur 6 zeigt schematisch den ersten Monitor 12 und den zweiten Monitor 14 mit an jeweils fünf Positionen gemessenen Helligkeitswerten, die auf 100 normiert sind. Der höchste gemessene Wert, den daher normiert wird du der daher 100 gesetzt ist, sei an der Position P1 des Bildschirms 36.1 des ersten Monitors 12 gemessen worden. Es ist zu erkennen, dass der niedrigste gemessene Wert mit $I_3 = 85$ an der Position P3 auf dem Bildschirm 36.2 des zweiten Monitors 14 in der linken oberen Ecke liegt. Das Minimum aller Intensitätswerte I ist damit 85. Für jede Position Pj wird vom Rechner 16 der Quotient $q_j = \dfrac{\min_i \{P_i\}}{I_j}$ berechnet. Beispielsweise wird die Intensität in Form der Leuchtdichte L in Candela pro Quadratmeter gemessen.

Eine Grafikkarte des Rechners 16 wird nun automatisch so programmiert, dass die Pixel, die beispielsweise zu der Position Pj gehören, auf den $q_j$-fachen Wert angesteuert werden. Soll also beispielsweise ein vollständig weißes Bild auf dem Bildschirm 36 dargestellt werden, so werden die Pixel an der Position P3 so angesteuert, dass sie die maximale Helligkeit liefern, weil $q_3 = 85/85 = 1$ gilt. Die Pixel an der Position P1 werden hingegen so angesteuert, dass sie das 0,85-fache der Helligkeit liefern, weil $q_1 = 85/100 = 0,85$ gilt. Die Pixel an der Position P4 werden auf das $q_4$-fache angesteuert, mit $q_4 = 85/94$. Für Pixel zwischen zwei Positionen werden die q-Werte interpoliert. Auf diese Weise zeigen alle Pixel die gleiche Helligkeit, die bei maximaler Ansteuerung der maximalen Helligkeit der Pixel an der Position P3 entspricht.

An jeder Position, zumindest aber an den Positionen P1 und P2 kann zudem eine Mehrzahl an Messwerten für die Lichtgröße, also beispielsweise die Helligkeit, aufgenommen werden. Dazu werden auf dem Bildschirm jeweils gleiche Helligkeiten dargestellt und der Sensor misst die tatsächlich vom Bildschirm dargestellte Helligkeit. Es wird so für jede Position eine Kurve erhalten, die die tatsächlich dargestellte Helligkeit gegen die darzustellende Helligkeit aufträgt. Die beiden Kurven werden miteinander korreliert, so dass eine Kurve erhalten wird, die die an der Position P1 tatsächlich dargestellte Helligkeit in Abhängigkeit von der an der Position P2 gemessenen Helligkeit angibt.

Im Betrieb des Monitors 12 altert dieser in guter Näherung gleichmäßig über den gesamten Bildschirm. Zwar ändert sich durch die Alterung bei gleicher Ansteuerung die dargestellte Helligkeit, das Verhältnis der dargestellten Helligkeiten an den Positionen P1 und P2 bleibt aber konstant. Im Betrieb wir daher durch den Sensor 26, der am Rahmen 22 befestigt ist, die Helligkeit an der Position P2 gemessen. Aus dieser Helligkeit und der Korrelationskurve wird die Darstellung im Zentrum des Bildschirms korrigiert. So wird eine etwaige Alterung des Bildschirms im Zentrum anhand einer Helligkeitsmessung am Rand kompensiert.

Das genannte Verfahren lässt sich mit reinen Helligkeitswerten durchführen. Dadurch, dass auf dem Bildschirm 36 nur eine bestimmte Farbe dargestellt wird, also beispielsweise rot, grün oder blau, kann auch die Farbhomogenität der Monitore 12, 14 eingestellt werden.

In einem zweiten erfindungsgemäßen Verfahren werden mit dem Sensor 26 eine Rot-Helligkeit, eine Grün-Helligkeit, eine Blau-Helligkeit, eine Weiß-Helligkeit und eine Schwarz-Helligkeit gemessen. Aus allen Positionen wird ein Ziel-Gamuts bestimmt, der an allen Positionen darstellbar ist. Um nachfolgend ein Bild auf einem oder beiden Bildschirmen darzustellen, werden die Bilddaten auf das Ziel-Gamut normiert.

Bild 7 zeigt, wie aus zwei Gamuts für gemessene CIE x/y/Y-Werte für die beiden Bildschirme ein Ziel-Gamut bestimmt wird.

Zur Überwachung der Alterung der Monitore 12, 14 werden in regelmäßigen Abständen die Pixel in der Umgebung des am Rahmen 22 befestigten Sensors 26 so angesteuert, dass sie bei korrekter Funktion einen bestimmten Normwert einer Lichtgröße abgeben. Diese Lichtgröße, beispielsweise die Helligkeit, wird vom Sensor 26 gemessen. Weicht der gemessene Lichtgrößenwert zu stark vom Normwert ab, wir eine neue Vermessung der Homogenität durchgeführt. Das regelmäßige Bestimmen der Alterung kann beispielsweise per Fernwartung durch einen vom Server 20 gesendeten Befehl ausgelöst werden. Die Fernwartung kann auch per Internet erfolgen.

**Patentansprüche**

1. Verfahren zum Kalibrieren eines Monitors (12, 14), mit den Schritten:

   (i) Positionieren eines Sensors (26) zum Messen einer Lichtgröße (I) auf dem Bildschirm, welcher Sensor (26) eine Montagevorrichtung (30) aufweist, die zum lösbaren Fixieren des Sensors an einem Monitor (12, 14) dergestalt ausgebildet ist, dass mittels des Sensors (26) im fixierten Zustand die Lichtgröße (I) eines Bildschirms (36) des Monitors (12, 14) messbar ist,
   (ii) Anzeigen von Bildern auf dem Bildschirm (36) in Form von über den Bildschirm (36) in x- und y-Richtung laufenden Streifen (40, 42), so dass aus einer mit einem Sensor (26) gemessenen Lichtgröße die Position (P1) des Sensors (26) auf dem Bildschirm (36) ermittelbar ist,
   (iii) Erfassen jeweils eines durch die am Sensor (26) vorbeilaufenden Streifen (40, 42) erzeugten, einen Helligkeitswert kodierenden Signals des Sensors (26) in Abhängigkeit von der Zeit derart, dass aus dem Zeitpunkt der Änderung des Helligkeitswertes jeweils die x- und y-Koordinate der Position (P1) des Sensors bestimmt wird,
   (iv) Ermitteln einer Position (P1) des Sensors (26) auf dem Bildschirm (36) aus dem Signal mit Hilfe der x- und y-Koordinate und
   (v) Ermitteln zumindest einer Lichtgröße (I) des Bildschirms (36) an der Position (P 1).

2. Verfahren nach Anspruch 1, **gekennzeichnet durch** den Schritt:

   (vi) Wiederholen der Schritte (i) bis (v) für weitere Positionen (P2, P3, P4), so dass eine Abstrahlcharakteristik des Bildschirms (36) erhalten wird.

3. Verfahren nach Anspruch 2, **dadurch gekennzeichnet, dass** die Abstrahlcharakteristik eine Helligkeits-Homogenität des Bildschirms (36) ist.

4. Verfahren nach einem der vorgenannten Ansprüche, **dadurch gekennzeichnet, dass** die Lichtgröße eine Leuchtdichte (I) oder Helligkeit ist, wobei das Verfahren die Schritte

   - Ermitteln eines Minimalwerts ($L_{min}$) aller ermittelten Helligkeiten (I) und
   - Korrigieren einer Darstellung eines Bilds auf dem Bildschirm (36) anhand des Minimalwerts ($L_{min}$)

umfasst.

5. Verfahren nach Anspruch 4, **dadurch gekennzeichnet, dass** das Korrigieren der Darstellung des Bilds den Schritt Normieren eines Ansteuerungswerts für eine Helligkeit für Pixel auf den Minimalwert ($L_{min}$), so dass eine Inhomogenität des Bildschirms (36) vermindert wird umfasst.

6. Verfahren nach einem der Ansprüche 1 bis 5, **dadurch gekennzeichnet, dass** die Lichtgröße eine Rot-Helligkeit, eine Grün-Helligkeit, eine Blau-Helligkeit, eine Weiß-Helligkeit und eine Schwarz-Helligkeit umfasst und das Verfahren den Schritt Ermitteln eines Ziel-Gamuts, der an allen Positionen darstellbar ist, umfasst.

7. Verfahren nach Anspruch 6, **gekennzeichnet**

**durch** den Schritt: Normieren von Ansteuersignalen für den Bildschirm auf den Ziel-Gamut, so dass der Bildschirm farblich homogen ist.

8. Verfahren nach einem der Ansprüche 1 bis 7, **dadurch gekennzeichnet, dass**

- die Lichtgröße zumindest einmal an einer ersten Position (P1) in einem Zentrum des Monitors und zumindest einmal an einer zweiten Position (P2) benachbart zu einem Rand des Monitors gemessen wird und
- dass eine Korrelation berechnet wird, mittels der aus der Lichtgröße an der zweiten Position (P2) auf die Lichtgröße an der ersten Position (P1) geschlossen werden kann.

9. Verfahren nach einem der Ansprüche 1 bis 7, **gekennzeichnet durch** die Schritte:

- Messen der Lichtgröße an der zweiten Position (P2) mit einem Sensor, der am Rand des Monitors befestigt ist, und
- Ansteuern des Monitors anhand der Korrelation, so dass eine etwaige Drift des Monitors im Zentrum ausgeglichen wird.

10. Verfahren nach einem der Ansprüche 1 bis 8 zum Kalibrieren einer medizinische Darstellungsvorrichtung mit dem vorgenannten einen Monitor (12) und einem zweiten Monitor (14), mit den Schritten

(i) Anzeigen von Bildern auf einem ersten Bildschirm (36.1) des ersten Monitors (12), so dass aus mit einem Sensor (26) gemessenen Daten dessen Position (P1) auf dem ersten Bildschirm (36.1) ermittelbar ist,
(ii) Erfassen eines Signals des Sensors (26) in Abhängigkeit von der Zeit,
(iii) Ermitteln einer Position (P1) des Sensors (26) relativ zum ersten Bildschirm (36.1) aus dem Signal,
(iv) Ermitteln zumindest einer Lichtgröße (I) des Bildschirms (36.1) an der Position (P1),
(v) Wiederholen der Schritte (i) bis (iv) für weitere Positionen (P2, P3, P4), so dass eine Abstrahlcharakteristik des ersten Bildschirms (36.1) erhalten wird, und
(vi) Wiederholen der Schritte (i) bis (v) für einen zweiten Bildschirm (36.2) des zweiten Monitors (14), so dass eine Abstrahlcharakteristik des zweiten Bildschirms (36.2) erhalten wird.

11. Verfahren nach Anspruch 10, **gekennzeichnet durch** den Schritt: Ansteuern des ersten Bildschirms (36.1) und des zweiten Bildschirms (36.2), so dass eine Inhomogenität zwischen dem ersten Bildschirm (36.1) und dem zweiten Bildschirm (36.2) vermindert wird, insbesondere ausgeglichen wird.

12. Verfahren nach einem der Ansprüche 10 oder 11, **gekennzeichnet durch** die Schritte:

- Ermitteln eines Minimalwerts ($L_{min}$) aller ermittelten Helligkeiten (I) beider Bildschirme (36.1, 36.2) und
- Korrigieren einer Darstellung von Bildern auf den Bildschirmen (36.1, 36.2) anhand des Minimalwerts ($L_{min}$).

13. Verfahren nach Anspruch 12, **dadurch gekennzeichnet, dass** das Korrigieren der Darstellung der Bilder den Schritt umfasst: Normieren eines Ansteuerungswerts für eine Helligkeit für Pixel auf den Minimalwert ($L_{min}$), so dass eine Inhomogenität der Bildschirme (36.1, 36.2) vermindert wird.

14. Verfahren nach einem der Ansprüche 10 bis 13, **dadurch gekennzeichnet, dass** die Lichtgröße eine Rot-Helligkeit, eine Grün-Helligkeit, eine Blau-Helligkeit, eine Weiß-Helligkeit und eine Schwarz-Helligkeit umfasst und das Verfahren den Schritt Ermitteln eines Ziel-Gamuts, der an allen Positionen darstellbar ist, umfasst.

15. Verfahren nach Anspruch 14, **gekennzeichnet durch** den Schritt:

Normieren von Ansteuersignalen für die Bildschirme (36.1, 36.2) auf den Ziel-Gamut, so dass beide Bildschirme farblich homogen sind.

16. Darstellungsvorrichtung mit einem ersten Monitor (12), der einen Bildschirm (36) zum Anzeigen eines Bilds und einen Sensor (26) aufweist, der zum Erfassen der Lichtgröße (I) am Bildschirm (36) lösbar befestigt ist, wobei der Sensor eine Montagevorrichtung (30) umfasst, die zum lösbaren Fixieren des Sensors am Monitor (12, 14) dergestalt ausgebildet ist, dass mittels des Sensors (26) im fixierten Zustand die Lichtgröße (I) eines Bildschirms (36) des Monitors (12, 14) messbar ist, und mit einem zweiten Monitor (14),
**gekennzeichnet durch**
eine elektrische Steuereinheit (16), die eingerichtet ist zum Durchführen eines Verfahrens mit den Schritten

(i) Anzeigen von Bildern auf dem Bildschirm (36) in Form von über den Bildschirm (36) in x- und y-Richtung laufenden Streifen (40, 42), so dass aus mit einem Sensor (26) gemessenen Daten dessen Position (P1) auf dem Bildschirm (36) ermittelbar ist,
(ii) Erfassen jeweils eines **durch** die am Sensor (26) vorbeilaufenden Streifen (40, 42) erzeugten, einen Helligkeitswert kodierenden Signals eines Sensors (26) in Abhängigkeit von der Zeit derart, dass aus dem Zeitpunkt der Änderung des Helligkeitswertes jeweils die x- und y-Koordinate der Position (P1) des Sensors bestimmt wird,

(iii) Ermitteln der Position (P1) des Sensors (26) relativ zum Bildschirm (36) aus dem Signal mit Hilfe der x- und y-Koordinate,

(iv) Ermitteln zumindest einer Lichtgröße (I) des Bildschirms (36) an der Position (P) und

(v) Wiederholen der Schritte (i) bis (iv) für zumindest zwei weitere Positionen, so dass eine Abstrahlcharakteristik des Bildschirms (36) erhalten wird.

## Claims

1. Method for calibrating a monitor (12, 14) comprising the steps:

    i. positioning a sensor (26) for measuring a light intensity (I) on the screen, which sensor (26) comprises an assembly device (30) which is configured for releasably fixing the sensor onto a monitor (12, 14) such that by means of the sensor (26) in a fixed position the light intensity (I) of a screen (36) of the monitor (12, 14) can be measured,

    ii. displaying images on the screen (36) in the form of strips (40, 42) running over the screen (36) in x and y direction, so that from a light intensity measured by a sensor (26) the position (P1) of the sensor (26) on the screen (36) can be determined,

    iii. determining a signal of the sensor (26) which is produced by the strips (40, 42) running past the sensor (26) and encodes a brightness level as a function of time, such that from the moment the brightness level changes the x and y coordinates of the position (P 1) of the sensor are determined respectively,

    iv. determining a position (P1) of the sensor (26) on the screen (36) from the signal by means of the x and y coordinates and

    v. determining at least one light intensity (I) of the screen (36) at position (P1).

2. Method according to claim 1, **characterised by** the step:

    (vi) repeating steps (i) to (v) for further positions (P2, P3, P4) so that a beam characteristic of the screen (36) is obtained.

3. Method according to claim 2, **characterised in that** the beam characteristic is a brightness homogeneity of the screen (36).

4. Method according to any one of the preceding claims, **characterised in that** the light intensity is a light density (I) or brightness, wherein the method comprises the steps

    - determining a minimum valve ($L_{min}$) of all determined brightness levels (I) and
    - correcting a representation of an image on the screen (36) with reference to the minimum value ($L_{min}$).

5. Method according to claim 4, **characterised in that** the correction of the representation of the image comprises the step of standardising a control value for a brightness for pixels to the minimum valve ($L_{min}$) so that any inhomogeneity of the screen (36) is reduced.

6. Method according to one of claims 1 to 5, **characterised in that** the light intensity includes a red brightness, a green brightness, a blue brightness, a white brightness and a black brightness and the method comprises the step of determining a target gamut, which can be represented in all positions.

7. Method according to claim 6, **characterised by** the step: standardising control signals for the screen to the target gamut so that the screen is homogenous in terms of colour.

8. Method according to one of claims 1 to 7, **characterised in that**

    - the light intensity is measured at least once in a first position (P1) in the centre of the monitor and at least once in a second position (P2) adjacent to the edge of the monitor and
    - **in that** a correlation is calculated from which the light intensity in the first position (P1) can be inferred from the light intensity in the second position (P2).

9. Method according to one of claims 1 to 7, **characterised by** the steps:

    - measuring the light intensity in the second position (P2) with a sensor which is secured to the edge of the monitor and
    - controlling the monitor with reference to the correlation so that any drift of the monitor in the centre is compensated for.

10. Method according to one of claims 1 to 8 for calibrating a medical display device with the aforementioned one monitor (12) and a second monitor (14) comprising the steps

(i) displaying images on a first screen (36.1) of the first monitor (12) so that from the data measured by a sensor (26) its position (P1) on the first screen (36.1) can be determined,

(ii) determining a signal of the sensor (26) as a function of time,

(iii) determining a position (P1) of the sensor (26) relative to the first screen (36.1) from the signal,

(iv) determining at least one light intensity (I) of the screen (36.1) at position (P1),

(v) repeating steps (i) to (iv) for further positions (P2, P3, P4) so that a beam characteristic of the first screen (36.1) is obtained and

(vi) repeating the steps (i) to (v) for a second screen (36.2) of the second monitor (14) so that a beam characteristic of the second screen (36.2) is obtained.

11. Method according to claim 10, **characterised by** the step:

> controlling the first screen (36.1) and the second screen (36.2) so that inhomogeneity between the first screen (36.1) and the second screen (36.2) is reduced, in particular is compensated for.

12. Method according to one of claims 10 or 11, **characterised by** the steps:

> - determining a minimum value ($L_{min}$) of all determined brightnesses (I) of both screens (36.1, 36.2) and
> - correcting the representation of images on the screens (36.1, 36.2) with reference to the minimum valve ($L_{min}$).

13. Method according to claim 12, **characterised in that** the correction of the representation of the images comprises the step: standardising a control value for a brightness for pixels to the minimum valve ($L_{min}$) so that any inhomogeneity of the screens (36.1, 36.2) is reduced.

14. Method according to one of claims 10 to 13, **characterised in that** the light intensity includes a red brightness, a green brightness, a blue brightness, a white brightness and a black brightness and the method comprises the step of determining a target gamut which can be shown in all positions.

15. Method according to claim 14, **characterised by** the step:

> standardising control signals for the screens (36.1, 36.2) to the target gamut so that both screens are homogenous in terms of colour.

16. Display device comprising a first monitor (12) which comprises a screen (36) for displaying an image and a sensor (26) which is secured detachably for determining the light intensity (I) on the screen (36), wherein the sensor comprises an assembly device (30) which is configured for detachably fixing the sensor to the monitor (12, 14) such that by means of the sensor (26) in the fixed position the light intensity (I) of a screen (36) of the monitor (12, 14) can be measured and with a second monitor (14), **characterised by**

an electric control unit (16) which is set up to perform a method comprising the steps

> (i) displaying images on the screen (36) in the form of strips (40, 42) running over the screen (36) in x and y direction, so that from data measured by a sensor (26) its position (P1) can be determined on the screen (36),
> (ii) determining a signal which is produced by the strips (40, 42) running past the sensor (26) and encodes a brightness level as a function of time such that from the moment the brightness level changes the x and y coordinates of the position (P1) of the sensor are determined,
> (iii) determining the position (P1) of the sensor (26) relative to the screen (36) from the signal by means of the x and y coordinates,
> (iv) determining at least one light intensity (I) of the screen (36) in position (P) and
> (v) repeating the steps (i) to (iv) for at least two further positions so that a beam characteristic of the screen (36) is obtained.

## Revendications

1. Procédé de calibrage d'un moniteur (12, 14) comprenant les étapes :

> (i) de positionnement d'un capteur (26) pour la mesure d'une grandeur de luminosité (I) sur l'écran, lequel capteur (26) présente un dispositif de montage (30) qui est conçu pour la fixation amovible du capteur sur un moniteur (12, 14), de sorte qu'une grandeur de luminosité (I) d'un écran (36) du moniteur (12, 14) puisse être mesurée au moyen du capteur (36) à l'état fixé,
> (ii) d'affichage d'images sur l'écran (36) sous la forme de bandes (40, 42) parcourant l'écran dans la direction x et la direction y, de sorte que la position (P1) du capteur (26) sur l'écran (36) puisse être évaluée à partir de la grandeur de luminosité mesurée avec un capteur (26),
> (iii) d'évaluation, chaque fois, d'un signal du capteur (26) codifiant une valeur de luminosité générée par les bandes (40, 42) passant par le capteur (26) en fonction du temps de telle manière que, chaque fois, les coordonnées x et y de la position (P1) du capteur sont déterminées à partir de l'instant de la modification de la valeur de la luminosité,

(iv) de détermination d'une position (P1) du capteur (26) sur l'écran (36) à partir du signal à l'aide des coordonnées x et y, et

(v) de détermination d'au moins une grandeur de luminosité (I) de l'écran (36) à la position (P1) .

2. Procédé selon la revendication 1 **caractérisé par** l'étape :

(vi) de répétition des étapes (i) à (v) pour d'autres positions (P2, P3, P4) de sorte qu'une caractéristique de rayonnement de l'écran (36) est obtenue.

3. Procédé selon la revendication 2 **caractérisé en ce que** la caractéristique de rayonnement est une homogénéité de luminosité de l'écran (36).

4. Procédé selon l'une des revendications précédentes **caractérisé en ce que** la grandeur de luminosité est une densité d'éclairement (I) ou une luminosité, le procédé comprenant les étapes

- de détermination d'une valeur minimale ($L_{min}$) de toutes les luminosités (I) déterminées, et
- de correction d'une représentation d'une image sur l'écran (36) en tenant compte de la valeur minimale ($L_{min}$).

5. Procédé selon la revendication 4 **caractérisé en ce que** la correction de la représentation de l'image comprend la standardisation d'une valeur de pilotage pour une luminosité en pixel à une valeur minimale ($L_{min}$) de sorte qu'une inhomogénéité de l'écran (36) se trouve diminuée.

6. Procédé selon l'une des revendications de 1 à 6 **caractérisé en ce que** la grandeur de luminosité comprend une luminosité du rouge, une luminosité du vert, une luminosité du bleu, une luminosité du blanc et une luminosité du noir et que le procédé comprend l'étape de détermination d'une gamme cible, qui peut être représentée dans toutes les positions.

7. Procédé selon la revendication 6 **caractérisé par** l'étape : standardisation de signaux de pilotage pour l'écran sur la gamme cible de sorte que l'écran est homogène au niveau des couleurs.

8. Procédé selon l'une des revendications de 1 à 7 **caractérisé en ce que**

- la grandeur de luminosité est au moins mesurée une fois à une première position (P1) au niveau d'un centre du moniteur et au moins une fois à une deuxième position (P2) voisine de l'un des bords du moniteur, et
- qu'une corrélation est calculée, au moyen de laquelle la grandeur de luminosité à la première position (P1) peut être arrêtée à partir de la grandeur de luminosité à la deuxième position (P2).

9. Procédé selon l'une des revendications de 1 à 7 **caractérisé par** les étapes :

- de mesure de la grandeur de luminosité à la deuxième position (P2) avec un capteur qui est fixé au bord du moniteur, et
- de pilotage du moniteur en tenant compte de la corrélation de sorte qu'une dérive éventuelle du moniteur est compensée au centre.

10. Procédé selon l'une des revendications de 1 à 8 pour le calibrage d'un dispositif de représentation médical comprenant un moniteur (12), cité précédemment, et un second moniteur (14), comprenant les étapes

(i) d'indication d'images sur un premier écran (36.1) du premier moniteur (12), de sorte qu'à partir des données mesurées avec un capteur (26), sa position (P1) sur le premier écran (36.1) peut être déterminée,

(ii) d'évaluation d'un signal du capteur (26) en fonction du temps,

(iii) de détermination d'une position (P1) du capteur (26) par rapport au premier écran (36) à partir du signal,

(iv) de détermination d'au moins une grandeur de luminosité (I) de l'écran (36.1) à la position (P1),

(v) de répétition des étapes (i) à (iv) pour d'autres positions (P2, P3, P4) de sorte qu'une caractéristique de rayonnement du premier écran (36.1) se trouve obtenue, et

(vi) de répétition des étapes (i) à (v) pour un second écran (36.2) du deuxième moniteur (14) de sorte qu'une caractéristique de rayonnement du second écran (36.2) se trouve obtenue.

11. Procédé selon la revendication 10 **caractérisé par** l'étape : pilotage du premier écran (36.1) et du second écran (36.2), de sorte qu'une inhomogénéité entre le premier écran (36.1) et le second écran (36.2) se trouve minimisée, en particulier équilibrée.

12. Procédé selon l'une des revendications 10 ou 11 **caractérisée par** les étapes :

- de détermination d'une valeur minimale ($L_{min}$) de toutes les luminosités (I) déterminées des deux écrans (36.1, 36.2) et

- de correction d'une représentation d'images sur les écrans (36.1, 36.2) en tenant compte de la valeur minimale (L$_{min}$) ·

13. Procédé selon la revendication 12 **caractérisé en ce que** la correction de la représentation des images comprend l'étape : de standardisation d'une valeur de pilotage pour la luminosité par pixel à la valeur minimale (L$_{min}$) de sorte qu'une inhomogénéité des écrans (36.1, 36.2) se trouve minimisée.

14. Procédé selon l'une des revendications de 10 à 13 **caractérisé en ce que** la grandeur de luminosité comprend une luminosité du rouge, une luminosité du vert, une luminosité du bleu, une luminosité du blanc et une luminosité du noir et que le procédé comprend l'étape de détermination d'une gamme cible qui peut être représentée dans toutes les positions.

15. Procédé selon la revendication 14 **caractérisé par** l'étape : de standardisation de signaux de pilotage pour les écrans (36.1, 36.2) sur la gamme cible de sorte que les deux écrans soient homogènes dans les couleurs.

16. Dispositif de représentation comprenant un premier moniteur (12) qui présente un écran (36), pour la visualisation d'une image, et un capteur (26), qui est fixé de manière amovible pour l'évaluation d'une grandeur de luminosité (I) sur l'écran (36), le capteur comprenant un dispositif de montage (30) qui est conçu pour une fixation amovible du capteur sur le moniteur (12, 14), de sorte que la grandeur de luminosité (I) d'un écran (36) du moniteur (12, 14) puisse être mesurée à l'état fixé au moyen du capteur (36), et comprenant un second moniteur (14),
**caractérisé par**
une unité de pilotage (16) électrique qui est installée pour l'exécution d'un procédé comprenant les étapes

(i) d'indication d'images sur l'écran (36) sous la forme de bandes (10, 42) parcourant l'écran (36) dans les directions x et y, de sorte que sa position (P1) peut être déterminée à partir des données mesurées avec un capteur (26),
(ii) d'évaluation d'un signal d'un capteur (26) codifiant une valeur de luminosité générée par les bandes (40, 42) passant dans le capteur (26) en fonction du temps de telle sorte qu'à partir de l'instant de modification de la valeur de la luminosité, chaque fois, les coordonnées x et y de la position (P1) du capteur se trouvent déterminées,
(iii) de détermination de la position (P1) du capteur (26) par rapport à l'écran (36) à partir du signal à l'aide des coordonnées x et y,

(iv) de détermination d'au moins une grandeur de luminosité (I) de l'écran (36) à la position (P), et
(v) de répétition des étapes (i) à (iv) de sorte qu'une caractéristique de rayonnement de l'écran (36) se trouve obtenue.

Fig. 1

Fig. 2

Fig. 3

Fig. 4

Fig. 5

10

12

14

P3
$I_3=85$

P4
$I_4=94$

P1
$I_1=100$

- 36 -

- 36 -

P5

P2

$I_2=94$

Fig. 6

grün

blau

rot

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7064831 B2

- US 6067166 A